(19) Europäisches Patentamt
European Patent Office
Office européen des brevets

(11) Numéro de publication : **0 454 569 A1**

(12) # DEMANDE DE BREVET EUROPEEN

(21) Numéro de dépôt : **91401078.0**

(51) Int. Cl.⁵ : **F26B 17/12, F26B 3/14**

(22) Date de dépôt : **23.04.91**

(30) Priorité : 27.04.90 FR 905419

(43) Date de publication de la demande :
30.10.91 Bulletin 91/44

(84) Etats contractants désignés :
DE DK ES FR GB GR IT NL SE

(71) Demandeur : COMIA-FAO S.A.
27, Boulevard de Châteaubriant
F-35500 Vitre (FR)

(72) Inventeur : Gerard, Gabriel
La Croix du Bourg
F-35500 La Chapelle Erbree (FR)
Inventeur : Houdault, Alain
3, place de la Mairie
F-35530 Noyelles-sur-Vilaine (FR)

(74) Mandataire : Jolly, Jean-Pierre et al
Cabinet Jolly 54, rue de Clichy
F-75009 Paris (FR)

(54) **Séchoir à grain.**

(57) L'invention concerne un séchoir à grain.
Ce séchoir est du type à colonne (1) et écoulement croisé de l'air de séchage, constitué de cellules superposées (3) permettant le passage descendant du grain, et fait intervenir un procédé de séchage, caractérisé en ce qu'il consiste à sécher le grain à un haut niveau de température dans la première zone de séchage (13) en haut de colonne et à le soumettre à un brusque refroidissement dans un compartiment (15) immédiatement inférieur, le séchage étant effectué de façon classique sur la partie inférieure restante de colonne.

EP 0 454 569 A1

FIG.1

L'invention concerne un séchoir à grain du type à colonne et écoulement croisé de l'air de séchage, constitué de cellules superposées permettant le passage descendant du grain.

De tels séchoirs sont connus dans la technique.

L'invention concerne en particulier un perfectionnement dans le cycle de séchage du grain.

On connaît par FR-A- 2 630 621 un séchoir de ce type qui comporte une amenée d'air frais en statique au niveau inférieur du compartiment supérieur de la colonne à grain. Cette amenée d'air, bien qu'elle puisse être effectuée seule au niveau le plus inférieur du compartiment, n'est pas dissociée de l'air de séchage supérieur, de telle sorte que l'air frais se mélange à l'air chaud de séchage dans les niveaux plus élevés du compartiment. On a donc une variation continue de la température de séchage de haut en bas dans le compartiment concerné. Par ailleurs, l'alimentation est effectuée en statique, c'est-à-dire par une aspiration en aval de la traversée de grain.

L'invention vise à obtenir un haut rendement de séchage du grain dans un nouveau cycle de séchage incluant également une amenée d'air frais ambiant mais dans des conditions différentes.

Le procédé de séchage selon l'invention se caractérise en ce qu'il consiste à sécher le grain à un haut niveau de température dans la première zone de séchage en haut de colonne et à le soumettre à un brusque refroidissement dans un compartiment immédiatement inférieur, le séchage étant effectué de façon classique sur la partie inférieure restante de colonne.

Le compartiment de refroidissement est dissocié des cellules supérieures de ladite zone de séchage à haute température, étant alimenté par une trappe à partir de la cellule de séchage immédiatement supérieure.

Le refroidissement dans le compartiment de refroidissement est obtenu par de l'air ambiant extérieur pulsé sous pression dans les gaines ou dièdres classiques de cellule.

Cette alimentation dynamique en air frais a pour but de faire subir au grain un refroidissement brutal après son très haut niveau de séchage (à haute température) au niveau immédiatement supérieur. Ce brusque refroidissement protège le grain et empêche le durcissement de son enveloppe. Ce principe de séchage à air très chaud en sommet de colonne suivi d'un brusque refroidissement sur un compartiment séparé (alimenté par une trappe) permet d'obtenir un excellent rendement de séchage et de conserver la qualité du grain en particulier du maïs à sécher.

Ce nouveau cycle de séchage permet de traiter le grain à une température supérieure à celle pratiquée dans le processus classique de séchage, de l'ordre de 130 à 180°, ce qui réalise un séchage très rapide du grain, et est donc propice à une production à grande quantité, recherchée pour ce type de séchoir.

Eventuellement, avant ledit refroidissement du grain, on pourra lui faire subir une étape de ressuage dans une intercellule spécifique.

Ladite alimentation en air de refroidissement est obtenue à partir d'un ventilateur haute pression, alimenté en air extérieur, et pulsant l'air ambiant dans des tubes d'injection d'air alimentant directement lesdites gaines de la ou des cellule(s) de refroidissement.

Un tel cycle de séchage convient avantageusement à un séchoir comportant trois zones de séchage de températures moyennes décroissantes, à savoir respectivement depuis le haut de colonne 150 à 180°C pour la zone de séchage, supérieure du cycle spécifique à l'invention, 110 à 130°C pour la zone de séchage centrale et 80 à 110°C pour la zone de séchage inférieure avec les conditions nécessaires habituelles de stabilisation intermédiaire (intercellules) et de refroidissement avant évacuation à la base de la colonne.

L'invention concerne également les séchoirs mettant en oeuvre ledit cycle de séchage spécifique de l'invention.

Un mode de réalisation de l'invention est à présent décrit en référence au dessin annexé sur lequel :

La figure 1 est une vue schématique d'un séchoir selon l'invention, et

La figure 2 est une vue en coupe selon la ligne A-A de la figure 1, montrant le système d'alimentation en air ambiant pulsé de la cellule de refroidissement.

Le séchoir représenté est du type à colonne de séchage 1 constitué d'une pluralité de cellules superposées 3 déterminant un certain nombre de zones fonctionnelles distinctes et dissociées et dans lesquelles passe le grain dans un mouvement descendant du haut vers le bas. Le passage d'air à l'intérieur, réalisé par l'intermédiaire de caissons latéraux 5 de passage de l'air de séchage chauffé, l'air étant acheminé (suivant les flèches) par dépression jusqu'au ventilateur extracteur de sommet 7, s'effectue de façon croisée à l'intérieur de chaque zone fonctionnelle (précisées ci-après) ainsi qu'il est bien connu. L'alimentation en grain est réalisée au sommet de la colonne dans des cellules de réserve 9 et son évacuation est faite par extraction (extracteur 11) à la base.

La colonne comporte une première zone de séchage haute 13, alimentée en grain à partir des cellules de réserve au sommet de la colonne, une zone de refroidissement sous-jacente 15, une seconde zone de séchage centrale 17 et une zone de séchage inférieure 19. Entre ces zones se trouvent des cellules 21 de stabilisation du grain dites intercellules et enfin, au niveau inférieur, une zone de refroidissement 23 juste avant l'évacuation. La première zone de séchage comporte trois cellules, la zone de refroidissement deux cellules, la zone de séchage centrale cinq, la zone de séchage inférieure également cinq cellules et la zone de refroidissement inférieure deux.

Trois générateurs d'air chaud 25 sont utilisés, dont deux se trouvent à la partie inférieure de colonne à gauche et à droite sur la figure et un en position centrale. Le circuit d'air est le suivant. L'air extérieur rentre par le bas, alimentant lesdits générateurs inférieurs gauche et droit (voir les flèches à gauche et à droite). Une partie de l'air extérieur à droite traverse les cellules de refroidissement inférieures 23. L'autre partie entre dans le générateur et en sort chauffée. Une partie se dirige à l'entrée du second générateur et l'autre est acheminée par la chicane 27 aux cellules de la zone de séchage inférieure à une température de 80 à 110°C, d'où il ressort et se mélange sensiblement au niveau supérieur de cette zone à l'air chaud du second générateur (gauche) pour atteindre la zone de séchage centrale à une température de 110 à 130°C. A la sortie de cette zone, l'air se mélange à l'air chaud du troisième générateur (en position centrale) pour atteindre la première zone de séchage (haute) à une température de 150 à 180°C, d'où il ressort pour être évacué à l'extérieur par le ventilateur extracteur.

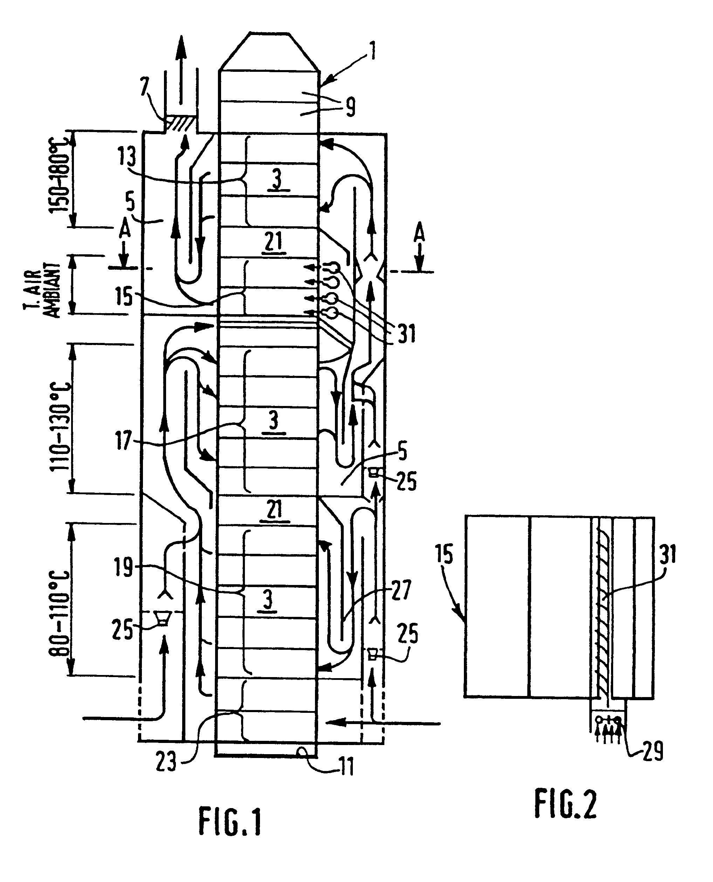

La figure 2 montre l'alimentation de la zone de refroidissement haute sous la zone de séchage à haute température. Cette alimentation en air de refroidissement est assurée par un ventilateur haute pression 29 alimenté en air extérieur pulsant l'air ambiant dans des tubes juxtaposés 31 d'injection d'air alimentant directement les gaines des cellules 2 de refroidissement. L'air de sortie est également évacué par le ventilateur extracteur.

Le séchoir tel que décrit permet d'obtenir un haut rendement de production tout en conservant la qualité du grain, notamment en raison de la progressivité de la température de l'air chaud des trois zones de séchage.

Naturellement, le cycle de séchage selon l'invention peut être utilisé sur d'autres séchoirs, par exemple sur des séchoirs plus courts à deux zones de séchage par exemple. Dans ce cas, il est nécessaire d'abaisser à 130-150°C la température d'attaque avant refroidissement.

En outre la cloison séparatrice munie d'une trappe de passage du grain entre le compartiment de séchage supérieur 13 et le compartiment de refroidissement sous-jacent 15 peut être éliminée. En effet, l'injection d'air ambiant à partir des tubes d'injection permet de bien contrôler la distance de pénétration de l'air froid au sein du grain, laquelle est inférieure à la profondeur de l'intercellule de séparation.

De plus, les tubes d'injection d'air peuvent être remplacés par un seul caisson d'injection d'air alimentant par une ou des ouvertures adéquates les gaines des cellules du compartiment de refroidissement. Eventuellement un volet de mélange peut être monté devant la ou lesdites ouvertures de façon à permettre une possibilité de dilution partielle de l'air froid avec l'air chaud environnant du séchoir avec modulation de la température de l'air injecté.

## Revendications

1- Procédé de séchage pour un séchoir à grain du type à colonne (1) et écoulement croisé de l'air de séchage, constitué de cellules superposées (3) permettant le passage descendant du grain, caractérisé en ce qu'il consiste à sécher le grain à un haut niveau de température, de 130 à 180°C, dans la première zone de séchage (13) en haut de colonne et à le soumettre à un brusque refroidissement dans un compartiment (15) immédiatement inférieur, le refroidissement dans le compartiment de refroidissement (15) étant obtenu par de l'air ambiant extérieur pulsé sous pression dans les gaines ou dièdres classiques de cellule, le séchage étant effectué de façon classique sur la partie inférieure restante de colonne.

2- Procédé de séchage pour séchoir selon la revendication 1, caractérisé en ce que le compartiment de refroidissement est dissocié des cellules supérieures de ladite zone de séchage à haute température (13), étant alimenté par exemple par une trappe à partir de la cellule de séchage immédiatement supérieure.

3- Procédé de séchage pour séchoir selon l'une des revendications précédentes, caractérisé en ce que préalablement au dit refroidissement le grain subit une étape de ressuage dans une intercellule (21).

4- Procédé de séchage pour séchoir selon l'une des revendications précédentes, caractérisé en ce que ladite alimentation en air de refroidissement est obtenue à partir d'un ventilateur haute pression, alimenté en air extérieur, et pulsant l'air ambiant dans des tubes d'injection d'air alimentant directement lesdites gaines de la ou des cellule(s) de refroidissement.

5- Séchoir pour la mise en oeuvre du procédé défini selon l'une des revendications précédentes, caractérisé en ce qu'il comporte trois zones de séchage de températures moyennes décroissantes, à savoir respectivement depuis le haut de colonne 150 à 180°C pour la zone de séchage supérieure (13) du cycle spécifique à l'invention, 110 à 130°C pour la zone de séchage centrale (17) et 80 à 110°C pour la zone de séchage inférieure (19) avec les conditions nécessaires habituelles de stabilisation intermédiaire (intercellules) et de refroidissement avant évacuation à la base de la colonne.

6- Séchoir pour la mise en oeuvre du procédé défini selon l'une des revendications 1 à 4, caractérisé en ce qu'il comporte deux zones de séchage, la zone de séchage haute étant traversée par de l'air à 130-150°C avant refroidissement.

7- Séchoir selon l'une des revendication 5 et 6, caractérisé en ce que la cloison séparatrice entre le compartiment de séchage supérieur (13) et le compartiment de refroidissement (15) est éliminée.

8- Séchoir selon l'une des revendications 5-7, caractérisé en ce que les tubes d'injection d'air (31) sont remplacés par un seul caisson alimentant en air froid par une ou des ouvertures adéquates les gaines des cellules du compartiment de refroidissement (15).

9- Séchoir selon la revendication 8, caractérisé en ce qu'un volet de mélange est monté devant la ou lesdites ouvertures d'injection de l'air ambiant de façon à permettre une possibilité de dilution de l'air froid avec l'air chaud environnant du séchoir avec modulation de la température de l'air injecté.

FIG.1

FIG.2

Office européen
des brevets

**RAPPORT DE RECHERCHE EUROPEENNE**

Numero de la demande

EP  91 40 1078

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 444 907  (BUHLER-MIAG GMBH)<br>* page 10, ligne 10 - page 11, ligne 34; revendications 1,3; figure 1 *<br>--- | 1,3-6 | F 26 B  17/12<br>F 26 B   3/14 |
| D,A | FR-A-2 630 621  (SO.CO.A., SOCIETE ANONYME)<br>* abrégé; page 1, lignes 23-27; page 10, ligne 13 - page 12, ligne 19; figures 1-4 *<br>----- | 1,3,5,6 | |
| | | | **DOMAINES TECHNIQUES RECHERCHES (Int. Cl.5)**<br><br>A 01 F<br>F 26 B |

Le présent rapport a été établi pour toutes les revendications

| Lieu de la recherche | Date d'achèvement de la recherche | Examinateur |
|---|---|---|
| BERLIN | 07-08-1991 | MARTIN DEL RIO A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..................................................................
& : membre de la même famille, document correspondant

EPO FORM 1503 61.82 (P0402)